# EUROPÄISCHE PATENTSCHRIFT

(11) **EP 1 306 598 B1**
(45) Veröffentlichungstag und Bekanntmachung des Hinweises auf die Patenterteilung: **11.08.2004**
(21) Anmeldenummer: 02020341.0
(22) Anmeldetag: 12.09.2002
(51) Int. Cl.: F16K 31/02

(54) **Mikroventil**
Microvalve
Microvalve

(30) Priorität: 15.10.2001 DE 20116898 U
(43) Veröffentlichungstag der Anmeldung: 02.05.2003
(73) Patentinhaber: Festo AG & Co, 73734 Esslingen (DE)
(72) Erfinder: Giousouf, Metin, 73732 Esslingen (DE); Weinmann, Michael, Dr., 73655 Plüderhausen (DE)
(74) Vertreter: Abel, Martin, Dipl.-Ing.

(56) Entgegenhaltungen:
- DE-C- 19 735 156
- US-A- 3 286 719
- US-A- 5 909 078
- US-A- 6 120 002

## Beschreibung

Die Erfindung betrifft ein Mikroventil mit einem eine Ventilkammer bildenden Gehäuse, wobei die Ventilkammer mit Fluidkanäle bildenden Gehäuseöffnungen in Verbindung steht, und mit einem innerhalb der Ventilkammer angeordneten Ventilglied, welches aus einem an einer Stelle am Gehäuse befestigten länglichen Aktorelement besteht, auf dem mindestens ein elektrischer Leiter aufgebracht ist, dessen sich vom Aktorelement unterscheidendes Wärmedehnungsverhalten die Auslenkung des Ventilgliedes in mindestens eine Stellung hervorruft.

Aus der DE 19735156 C1 ist ein piezoelektrisch betätigtes Mikroventil bekannt, wobei das Ventilglied gegen eine Gehäuseöffnung angedrückt wird, wenn sich eine auf dem Aktorelement angebrachte Piezokeramik durch elektrische Ansteuerung in ihrer Ausdehnung verändert. Durch den piezoelektrischen Effekt biegt sich das Aktorelement so durch, dass die Gehäuseöffnung durch den Ventilsitz des Aktorelements abgedichtet wird und dadurch der mit der Gehäuseöffnung verbundene Fluidkanal geschlossen ist. Das bekannte Mikroventil ist durch den piezoelektrischen Effekt einfach ansteuerbar und eignet sich bei geringen Baumaßen zur Steuerung des Durchflusses eines Fluids.

Bei dem aus der DE 19735156 C1 bekannten Mikroventil besteht einerseits der Nachteil, dass lediglich ein Fluidkreis mit Zu- und Abfluss mit dem Mikroventil verbindbar ist, so dass beispielsweise eine Entlüftung der Ventilkammer bei gesperrtem ersten Fluidkreis nicht möglich ist. Andererseits besteht das komplette Mikroventil aus Materialien, wie Metall oder Keramik, die in den erforderlichen Dimensionen schwer bearbeitbar sind.

Neben dem Mikroventil mit einem Aktorelement, welches durch einen piezoelektrischen Effekt gegen eine Gehäuseöffnung auslenkbar ist, ist auch bekannt, das Ausdehnungsverhalten eines elektrisch erhitzten Leiters gegenüber dem des Aktorelements so zu verwenden, dass das Ventilglied sich bei Erhitzung des elektrischen Leiters in eine Schließstellung verbiegt, bei der ein Ventilsitz die Gehäuseöffnung mit Fluidanschlüssen sperrt.

Es ist Aufgabe der vorliegenden Erfindung, ein Mikroventil der eingangs genannten Art derart weiterzubilden, dass es einfach und kostengünstig herzustellen ist und gleichzeitig leichtgewichtig ist.

Diese Aufgabe wird in Verbindung mit den eingangs genannten Merkmalen dadurch gelöst, dass das Aktorelement aus einem Kunststoffmaterial ausgebildet ist.

Auf dem Aktorelement ist ein elektrischer Leiter aufgebracht. Der elektrische Leiter weist einen entsprechend geringen Widerstand auf, so dass er sich bei Bestromung erhitzt, wodurch sich das Aktorelement mit dem darauf angeordneten Ventilsitz verbiegt, um eine bestimmte Stellung in Bezug zu mindestens einer Öffnung des Gehäuses einzunehmen, durch die das Fluid strömen kann. Bei den geringen Dimensionen ist das Aktorelement aus Kunststoff besonders leicht durch Formgebungsverfahren, wie Fräsen, Gießen oder Sägen, herzustellen und zu gestalten. Das Aktorelement kann beispielsweise aus einer ebenen Kunststofffläche durch Heißprägen oder Laserbearbeitung herausgearbeitet werden.

Vorteilhafte Weiterbildungen der Erfindung gehen aus den Unteransprüchen hervor.

Das Mikroventil mit dem Kunststoff-Aktorelement lässt sich besonders kostengünstig herstellen. Insbesondere lassen sich Dichtsitz- und Düsenkonturen in Kunststoff-Abformtechnik für Fluidtechnik besonders geeignet herstellen. Deswegen ist ein Mikroventil mit einem einstückig zusammen mit einem Teil des Gehäuses ausgebildeten Aktorelement den herkömmlichen Aktorelementen aus Silizium-Mikromechanik überlegen. Ferner können Aktorelemente aus Kunststoff hinsichtlich der Bewegungsfreiheit mit Kunststoff-Abformtechnik optimal gestaltet und dadurch in ihrem möglichen Biegungshub eingestellt werden.

Bei einer Weiterbildung der Erfindung ist das längliche Aktorelement an einer Stelle am Gehäuse befestigt und rechtwinklig zu seiner Längsrichtung so auslenkbar, dass es in einer ersten Schließstellung eine erste Gehäuseöffnung und in einer zweiten Schließstellung eine zweite Gehäuseöffnung abdichtet. Dadurch wird in der ersten Schließstellung einerseits der Arbeitskanal oder die Zuführung in die Ventilkammer abgedichtet, wobei jeweils die Gehäuseöffnung durch den Ventilsitz abgedichtet wird. Dabei wird entweder die Entlüftung verhindert, während der Fluss des Fluids ermöglicht ist, oder der Fluidkanal ist gesperrt, und eine Entlüftung ist möglich.

Das längliche Aktorelement kann auch zusammen mit einem Teil des Gehäuses gebildet sein, wobei es im Wesentlichen in einer Ebene mit dem Teil des Gehäuses angeordnet sein kann. Das Mikroventil kann bevorzugt zwei Gehäuseteile enthalten, die seitlich auf das aus dem Kunststoffmaterial gebildeten Teil des Gehäuses aufgesetzt, insbesondere aufgeklebt werden. Die beiden Gehäuseteile werden somit seitlich auf das mit dem Aktorelement verbundenen Teil des Gehäuses aufgebracht. Da das Aktorelement und das Teil des Gehäuses aus Kunststoffmaterial bestehen, besteht die Möglichkeit, das Mikroventil preisgünstig herzustellen, wobei das thermomechanische Verhalten, das heißt die unterschiedlichen Wärmeausdehnungen von elektrischem Leiter und Aktorelement, leicht durch Verwendung unterschiedlicher Kunststoffmaterialien des Aktorelements einstellbar ist. Letzteres gilt auch bei vom Gehäuse unabhängiger Ausgestaltung des Aktorelementes.

Somit entsteht ein für zahlreiche Anwendungen, beispielsweise bei Werkzeugmaschinen oder Handhabungsgeräte, kostengünstiges Mikroventil, dessen Leistungsdaten durch die Verwendung des Kunststoffmaterials einfach veränderbar sind.

Die beiden an das mit dem Aktorelement ausgestattete mittige Teil des Gehäuses seitlich angesetzten Gehäuseteile können in herkömmlicher Technik mittels Mikrospritzgusstechnik oder auch mittels Heißprägen hergestellt werden.

Bei einer vorteilhaften Ausgestaltung des Mikroventils ist das Aktorelement einschließlich des elektrischen Leiters durch Heißprägen hergestellt und bildet ein kostengünstiges Heißprägebauteil.

Bevorzugt sind das Aktorelement und das mit diesem verbundene Teil des Gehäuses einstückig ausgebildet und im Wesentlichen in einer Ebene angeordnet. Das Teil des Gehäuses kann dabei einen Kunststoffrahmen bilden, an dem das längliche Aktorelement einseitig befestigt ist. Das Aktorelement und das als Kunststoffrahmen ausgebildete Teil des Gehäuses liegen dabei zweckmäßigerweise im Wesentlichen in einer Ebene. Beide können in Kunststoffspritztechnik oder durch ein Präge- oder Stanzverfahren hergestellt werden. Für höhere Präzision bei geringen Abmessungen bietet sich die Heißprägetechnik an. Auf dem aus dem Kunststoffmaterial hergestellten Aktorelement wird einseitig oder auch beidseitig eine elektrische Leiterbahn aufgebracht, um im Betrieb des Mikroventils durch Widerstandsheizung unter Zuhilfenahme der unterschiedlichen Wärmeausdehnungsverhalten von Kunststoff und dem Metall der Leiterbahn eine mechanische Verformung des Aktorelements hervorzurufen. Dazu kann die eine Seite des Aktorelements auch mit einer Heißprägefolie als elektrischen Leiter bestückt werden, die in einem anschließenden Herstellungsprozess zusätzlich galvanisch metallisiert wird und damit mit größerer Dicke ausgestaltet werden kann.

Je nach Steifigkeitsanforderungen an das Aktorelement bzw. je nach Fluid-Druck, den das Mikroventil schalten soll, kann das Aktorelement ein- oder mehrseitig aufgehängt sein.

Bei einer bevorzugten Weiterbildung der Erfindung ist das Aktorelement einseitig mit dem Gehäuse verbunden, und das freistehende Ende des Aktorelements ist an zwei gegenüberliegenden Seiten des Aktorelements mit jeweils einer Verschlusspartie versehen, um bei einer Auslenkung in der einen Richtung eine erste Gehäuseöffnung abzudichten und bei entgegengesetzter Auslenkung eine zweite Gehäuseöffnung abzudichten. Die erste Gehäuseöffnung ist dabei bevorzugt eine Fluidzuführöffnung, und die zweite Gehäuseöffnung kann beispielsweise eine Entlüftungsöffnung sein. Eine dritte Gehäuseöffnung dient als Arbeitskanal, der mit einer Fluidzuleitung für den zu betreibenden Aktor, beispielsweise ein Arbeitszylinder, versehen ist. In der ersten Stellung des Aktorelements, bei der die erste Gehäuseöffnung abgedichtet ist, wird beispielsweise die Ventilkammer über die Entlüftungsöffnung entlüftet, das heißt, Fluid wird abgeführt, um den Fluiddruck im Fluid-Arbeitskanal zu verringern. In der zweiten Stellung des Aktorelements, bei der die zweite Gehäuseöffnung abgedichtet ist, kann das Fluid von dem Zuführkanal in den Arbeitskanal zugeführt werden, wodurch beispielsweise ein Kolben eines angeschlossenen Aktors verstellbar ist.

Das Fluid kann ein gasförmiges Medium, beispielsweise Druckluft, oder auch ein hydraulisches Medium, beispielsweise Hydrauliköl sein.

Das freie Ende des Aktorelements kann in einer Führung oder durch ein elastisches Element beweglich am Gehäuse gelagert sein. Das elastische Element kann das freie Ende des Aktorelements mit einem Bereich des Gehäuses elastisch lagernd verbinden, so dass das freie Ende des Aktorelements nur in einem gewissen Maß auslenkbar ist und durch das elastische Element eine Rückstellkraft in eine Neutralposition erfährt. Andererseits kann aber auch eine Führungsnut vorgesehen sein, in der das freie Ende des Aktorelements verschieblich gelagert ist.

Das erfindungsgemäße Mikroventil arbeitet insbesondere nach einem so genannten thermomechanischen Betätigungsprinzip. Dabei enthält das Ventilglied zum Beispiel entweder ein membranartiges oder ein längliches, zungenartiges Aktorelement, welches senkrecht zur Ausdehnungs- bzw. Längsrichtung elastisch biegbar ist. Auf dem Aktorelement ist ein elektrisch leitendes Material als elektrischer Leiter vorgesehen, das sich bei entsprechender Bestromung aufheizt. Das Ventilglied biegt sich gemäß der Geometrie durch die unterschiedlichen Wärmedehnungsverhalten von Aktorelement und elektrischem Leiter aus. Bei entsprechender geometrischer Gestaltung und passender Wahl der Materialien lässt sich durch das Ventilglied eine gewünschte Gehäuseöffnung entweder vollständig abdichten, oder es lässt sich deren Querschnitt so verändern, dass der Durchfluss des Fluids verringert wird.

Bei einer weiteren bevorzugten Weiterbildung der Erfindung ist das Aktorelement in der Art einer Wippe im Gehäuse gelagert, wobei zwei freistehende Enden jeweils mit einer Verschlusspartie versehen sind, um wahlweise in einer ersten Schaltstellung eine erste Gehäuseöffnung mit einer Verschlusspartie abzudichten und die zweite Gehäuseöffnung freizugeben und in einer weiteren Schaltstellung die zweite Gehäuseöffnung mit dem anderen Ventilsitz abzudichten und die erste Gehäuseöffnung freizugeben. Das Mikroventil weist dabei ein innerhalb der Ventilkammer angeordnetes wippenartiges Ventilglied auf, das in einer Endstellung des wippenartigen Aktorelements die eine Gehäuseöffnung abdichtet und in der anderen Endstellung die andere Gehäuseöffnung. Die wippenartige Auslenkung wird durch ein einerseits an dem Gehäuse befestigtes und andererseits mit einem vorzugsweise rahmenartigen Abschnitt des Aktorelementes verbundenes Trägerteil gewährleistet, auf dem wiederum mindestens ein elektrischer Leiter aufgebracht ist. Das Trägerteil ist derart angeordnet und ausgebildet, dass bei sich aufheizendem elektrischem Leiter das Aktorelement in die eine oder andere Schaltstellung ausgelenkt wird.

Das Trägerelement kann innerhalb eines rahmenartig ausgeführten Abschnittes des Aktorelements und im Wesentlichen in einer Ebene zum Aktorelement ausgeführt sein. Das eine Ende des Trägerelements ist dann mit dem freien Ende des rahmenartigen Abschnittes des Aktorelements verbunden und andererseits feststehend am Gehäuse, insbesondere an der Innenseite der Ventilkammer, befestigt. Wenn sich nun das Trägerteil auf Grund der Erwärmung des elektrischen Leiters verbiegt, wird der wippenförmige Abschnitt des Aktorelements relativ zur Ventilkammer verschwenkt, wodurch das Aktorelement in die gewünschte Schaltstellung verbracht wird.

Das Aktorelement kann bei einer anderen Weiterbildung aber auch sternförmig ausgebildet sein, wobei es mindestens drei und vorzugsweise vier Arme aufweist, wobei mehrere davon an der Innenseite der Ventilkammer, insbesondere am Rand derselben befestigt sind. Auf den Armen oder insbesondere an der mittigen Schnittstelle dieses derart gestalteten Aktorelements ist dann mindestens eine Verschlusspartie vorgesehen, die wiederum durch das Verbiegen des Aktorelements in eine Schließstellung für eine oder mehrere Gehäuseöffnungen auslenkbar ist. Auf einem oder mehreren Armen dieses sternförmigen Aktorelements ist dann wiederum mindestens ein elektrischer Leiter aufgebracht, der bei Bestromung eine andere Wärmeausdehnung vorsieht als das Material des Aktorelements. Auf diese Weise kann dann wiederum die Auslenkung des Ventilglieds entsprechend eingestellt werden.

Der mindestens eine elektrische Leiter kann auf dem Aktorelement als Schichtmaterial oder als Leiterschleife vorgesehen sein. Auf dem Aktorelement kann eine zusätzliche Öffnung oder Ausnehmung vorgesehen sein, um einen Fluidaustausch von der einen Seite des flächigen Aktorelements auf die andere Seite zuzulassen, so dass sich ein Druckausgleich des Fluids innerhalb der Ventilkammer zügig einstellen kann.

Nachfolgend wird die Erfindung anhand der beiliegenden Zeichnung näher erläutert. In dieser zeigen:
- Fig. 1: einen Längsschnitt durch eine erste Ausführungsform des erfindungsgemäßen Mikroventils in stark vergrößerter Darstellung,
- Fig. 2: eine geschnittene Darstellung des Mikroventils mit einer Draufsicht auf das Ventilglied entsprechend der Ausführungsform nach Fig. 1,
- Fig. 3: eine schematische Darstellung einer zweiten Ausführungsform des erfindungsgemäßen Ventilglieds für ein Mikroventil,
- Fig. 4: einen Längsschnitt durch ein mit dem Ventilglied gemäß Figur 3 ausgestattetes Mikroventil, und
- Fig. 5: eine weitere Ausführungsform des Mikroventils in einer der Figur 2 entsprechenden Darstellungsweise.

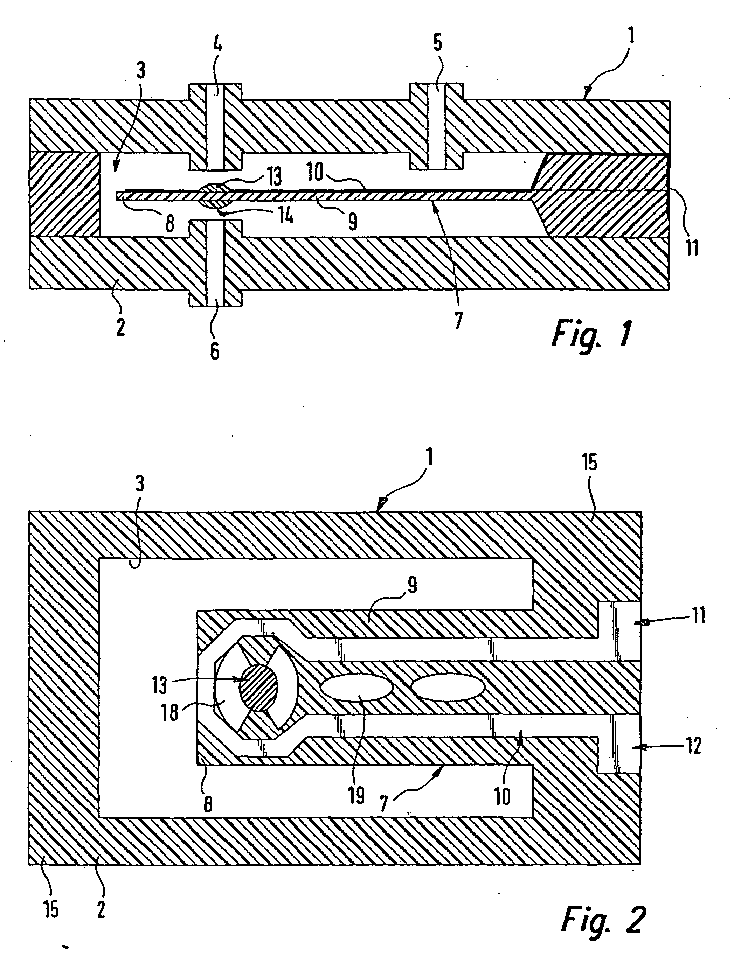

Das Mikroventil 1 gemäß der in Fig. 1 dargestellten, ersten Ausführungsform weist ein Gehäuse 2 mit einer innenliegend ausgebildeten Ventilkammer 3 auf. Das Gehäuse 2 weist eine erste Gehäuseöffnung 4 auf, die als Zuführung für ein Fluid, insbesondere Druckluft, dient und als Zuführkanal bezeichnet werden kann. Eine zweite Gehäuseöffnung 5 bildet einen Arbeitskanal. Außenseitig am Gehäuse oder in der jeweiligen Öffnung sind Fluidanschlüsse vorgesehen, um Fluidleitungen mit den Gehäuseöffnungen 4, 5 verbinden zu können. Eine dritte Gehäuseöffnung 6 ist als Entlüftungskanal vorgesehen, kann aber auch alternativ als weiterer Zuführ- oder Arbeitskanal dienen.

Das Mikroventil 1 steht über die erste Gehäuseöffnung 4 mit einer Druckquelle, über die zweite Gehäuseöffnung 5 mit dem zu betätigenden Aktor und über die dritte Gehäuseöffnung 6 mit einer Drucksenke, insbesondere die Atmosphäre, in Verbindung. Wenn das Fluid statt Druckluft ein Hydrauliköl oder ein sonstiges hydraulisches Medium ist, kann die dritte Gehäuseöffnung 6 einen Entleerungskanal bilden.

Innerhalb der Ventilkammer 3 ist ein Ventilglied 7 vorgesehen, das einseitig am Gehäuse 2 befestigt ist und ein freistehendes Ende 8 aufweist. Das Ventilglied 7 ist im Wesentlichen als langgestrecktes, flächiges Element ausgebildet und mindestens zweischichtig aufgebaut. Die erste Schicht bildet das Aktorelement 9, auf die ein elektrischer Leiter 10 in Form einer Leiterschicht aufgebracht, insbesondere aufgeklebt oder in sonstiger Weise gebondet ist. Der elektrische Leiter 10 ist über Anschlussleitungen 11 und 12 mit einer Stromquelle verbindbar, so dass der elektrische Leiter durch den fließenden elektrischen Strom erhitzt werden kann. Auf Grund der Erhitzung des elektrischen Leiters dehnt sich dessen Material aus, was wegen des unterschiedlichen Wärmeausdehnungsverhaltens des Kunststoff-Materials des Aktorelements 9 und des Metalls des elektrischen Leiters 10 zum Verbiegen des Ventilglieds 7 senkrecht zu dessen Längsachse führt.

Das Ventilglied 7 weist an jeweils benachbart zur ersten Gehäuseöffnung 4 und zur dritten Gehäuseöffnung 6 liegenden Stellen eine erste Verschlusspartie 13 und eine zweite Verschlusspartie 14 auf. Durch entsprechende Bestromung des elektrischen Leiters 10 kann eine Auslenkung des Ventilgliedes 7 hervorgerufen werden, um die erwähnten Gehäuseöffnungen 4, 6 wahlweise freizugeben oder zu verschließen. Soweit das Ventilglied 7 in einer ersten Schließstellung die erste Gehäuseöffnung 4 abdichtet, liegt die erste Verschlusspartie 13 dichtend an der Innenseite der ersten Gehäuseöffnung 4 an, die hier einen Ventilsitz aufweist. In der gegenüberliegenden zweiten Schließstellung liegt das Ventilglied 7 mit der zweiten Verschlusspartie 14 dichtend an der dritten Gehäuseöffnung 6 an. Die jeweils freigegebene Gehäuseöffnung kommuniziert mit der zweiten Gehäuseöffnung 5. Somit ist eine 3/2-Ventilfunktion realisierbar.

In der gezeigten Ausführungsform sind beide Verschlusspartien 13, 14 an jeweils gegenüberliegenden Seiten am Ventilglied 7 angeordnet. Je nach Ausführung der Ventilkammer mit den jeweiligen Gehäuseöffnungen 4, 5, 6 lassen sich jedoch die Verschlusspartien gegenüberliegend der jeweils abzudichtenden Gehäuseöffnung an unterschiedlichen Stellen auf dem Ventilglied 7 anordnen. Das Mikroventil kann auch noch weitere Gehäuseöffnungen aufweisen, die zusätzlich mit demselben Ventilglied 7 gesteuert werden können, wobei jeweils nur eine weitere Verschlusspartie auf dem Aktorelement 9 angeordnet werden muss.

Je nach Ausführung des Mikroventils 1 kann der elektrische Leiter 10 (es kann sich um nur einen oder um mehrere elektrische Leiter 10 handeln) entweder nur auf einer Seite des Aktorelements 9 angeordnet sein, so dass das Aktorelement 9 aus einer mittigen Ruheposition in die erste Schließstellung auslenkbar ist. Es können aber auch beidseitig des Aktorelements 9 elektrische Leiter angeordnet sein, die das Ventilglied 7 einerseits in die erste Schließstellung und bei der Betätigung des anderen, gegenüberliegenden elektrischen Leiters in die andere, zweite Schließstellung auslenken können.

Wenn der elektrische Leiter 10 wie in der Ausführungsform nur einseitig am Aktorelement 9 aufgebracht ist, kann die zweite Stellung auch durch eine mechanische Vorspannung des Ventilglieds 7 in Richtung der zweiten Stellung realisiert werden. Der Erhalt der zweiten Stellung kann auch durch einen Strömungseffekt des Fluids erzielt oder zumindest unterstützt werden.

Wie in Fig. 2 sichtbar, ist das Aktorelement 9 vorzugsweise als ebenes, flaches Teil ausgebildet, auf dessen einer Seite der elektrische Leiter 10 in Form einer Leiterschleife aufgebracht ist. Das Aktorelement 9 ist zusammen mit einem Teil 15 des Gehäuses 2 als flächiges Element ausgebildet und besteht aus einem Kunststoffmaterial. Bevorzugt wird das Aktorelement 9 mit dem Teil 15 des Gehäuses 2 aus einem einzigen Kunststoffelement hergestellt, wobei der die Ventilkammer 3 bildende Teil beispielsweise aus der Kunststofffläche herausgesägt oder herausgetrennt wird. Auch eine Herstellung in Spritzgießtechnik oder Abformtechnik wäre möglich. Auf diese Weise entsteht ein ebenes Gebilde, wobei das Teil 15 des Gehäuses 2 ein ringförmiges oder rahmenartiges Element bildet und das Aktorelement 9 in dessen Innenbereich vorsteht. An der Oberseite und der Unterseite des in Fig. 2 dargestellten ebenen Teils 15 des Gehäuses 2 sind zwei deckelartige Gehäuseteile 16 und 17 aufsetzbar, so dass eine abgeschlossene Ventilkammer 3 entsteht.

Das Aktorelement 9 weist zweckmäßigerweise eine oder mehrere Durchbrechungen 18 und 19 auf, so dass das Fluid sich nicht am Aktorelement 9 staut und ein schneller Fluid-Druckausgleich ermöglicht wird.

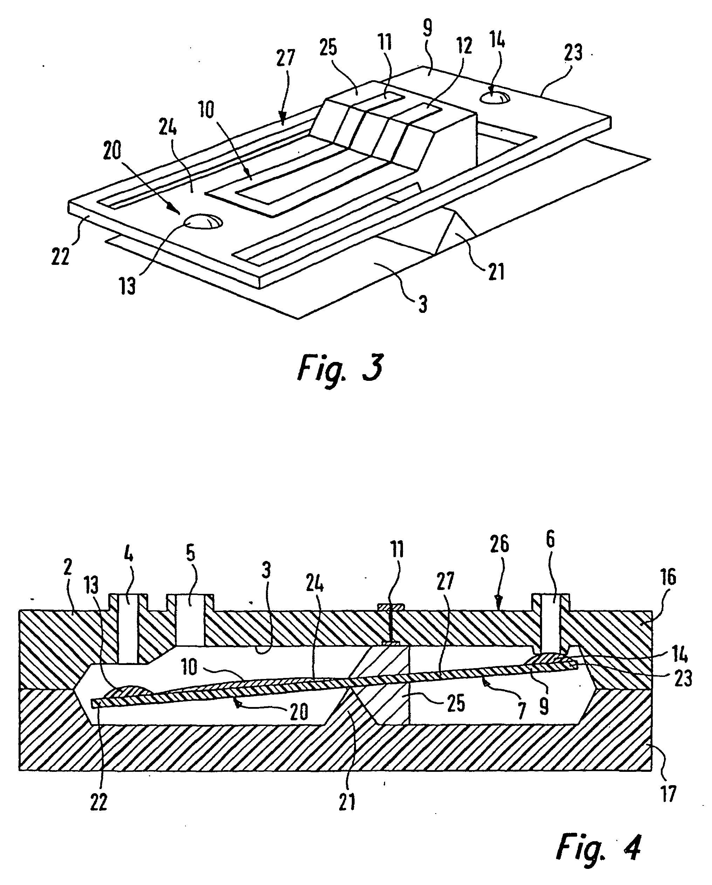

In.Fig. 3 ist ein Ventilglied 20 gemäß einer zweiten Ausführungsform dargestellt. Dabei ist das Ventilglied 20 in der Art einer Wippe innerhalb der Ventilkammer 3 verschwenkbar gelagert. Das Aktorelement 9 hat einen rahmenförmig ausgebildeten Abschnitt 27, der insbesondere mittig auf einem gehäusefesten Steg 21 aufgesetzt und um diesen verschwenkbar gelagert ist. Der rahmenförmige Abschnitt 27 des Aktorelementes 9 bildet dabei bezogen auf den Steg 21 zwei freistehende Enden 22 und 23. Ein ebenfalls zum Aktorelement 9 gehörendes Trägerteil 24 ist innerhalb des rahmenartigen Abschnittes 27 angeordnet und mit dem einen freien Ende 22 des Abschnittes 27 des Aktorelementes 9 fest verbunden. Von dort ragt es zungenartig in den von dem Abschnitt 27 umrahmten Bereich, wobei an seinem anderen Ende 24 ein Befestigungselement 25 vorgesehen ist, das innerhalb der Ventilkammer einklemmbar ist und dadurch mit dem Gehäuse 2 fest verbindbar ist. Eine andere Befestigungsart ist ebenfalls möglich. Der elektrische Leiter 10 erstreckt sich über das Trägerteil 24, eventuell auch über den rahmenförmigen Abschnitt 27 des Aktorelementes 9, und ist mittels zweier elektrischer Anschlüsse 11 und 12 elektrisch leitend mit einer nicht weiter dargestellten Stromquelle verbunden.

In Fig. 4 ist das gesamte Mikroventil 26 nach der zweiten Ausführungsform mit dem Aktorelement 9 in der Art einer Wippe dargestellt, wobei mit der ersten Ausführungsform übereinstimmende Bauteile mit denselben Bezugszeichen versehen sind. Das Gehäuse 2 besteht aus zwei separaten Teilen 16 und 17, die aus einem Kunststoffmaterial hergestellt sein können. Auch das Aktorelement 9 besteht bevorzugt aus einem Kunststoffmaterial.

Ein Mikroventil 26, bei dem sowohl das Gehäuse 2 als auch das Aktorelement 9 aus Kunststoffmaterial besteht, lässt sich besonders kostengünstig herstellen. Insbesondere lassen sich die wesentlichen Strukturen in Kunststoff-Abformtechnik besser für die Fluidtechnik herstellen als mit herkömmlicher Silizium-Mikromechanik. Das Aktorelement 9 kann hinsichtlich der Bewegungsfreiheit mit Kunststoff-Abformtechnik optimal ausgestaltet werden und beispielsweise in einer Richtung vorgespannt sein bzw. leicht in jeder gewünschten Form ausgestaltet werden.

Durch das Wippen-Design des Ventilgliedes 20 bzw. Aktorelements 9 lassen sich so genannte 3/2-Wegeventile auf einfache Weise realisieren, bei denen beide oder auch alle drei Fluidanschlüsse 4, 5, 6 an einer gemeinsamen, in Figur 4 obenliegenden, Gehäuseseite angeordnet sind. Ein anderer Vorteil der Kunststofftechnik besteht darin, dass das Aktorelement 9 durch Verunreinigungen in seiner Funktion als Biegewandler nicht beeinträchtigt wird, wie es beispielsweise bei elektrostatischen Aktorelementen, die nicht aus Kunststoffmaterial bestehen, der Fall ist. Das Aktorelement 9 und auch die Ventilkammer 3 sind bevorzugt mit öl- und wasserabweisenden Beschichtungen, insbesondere aus PTFE, in einem CVD-Prozess beschichtet, um Öl- und Wasserrückstände aus dem pneumatischen System und aus der Ventilkammer 3 des Mikroventils 26 herauszuspülen. Dadurch können Ablagerungen in der Ventilkammer 3 und auch im Gesamtsystem vermieden werden.

Das Mikroventil 26 funktioniert folgendermaßen: Beispielsweise befindet sich das Aktorelement 9 in einem unbestromten Zustand in der in Fig. 4 dargestellten Lage, wobei die dritte Gehäuseöffnung 6 durch den Ventilsitz 14 am freien Ende 23 des Aktorelements dichtend geschlossen ist. Die Schließkraft kann das entsprechend vorgespannte Trägerteil 24 liefern. Gleichzeitig ist die erste Gehäuseöffnung 4 freigegeben, so dass der Fluidstrom von dort über die Ventilkammer 3 in die zweite Gehäuseöffnung 5 strömen kann. Wird nun der elektrische Leiter 10 über die elektrischen Anschlüsse 11, 12 mit Strom versorgt, erhitzt sich der elektrische Leiter 10 wegen seines geringen Widerstandes und des daraus resultierenden hohen Stroms. Der elektrische Leiter 10 dehnt sich entsprechend aus, wobei dessen Ausdehnung in einem anderen Umfang erfolgt als die Ausdehnung des Bereiches des Aktorelementes 9, auf dem der elektrische Leiter 10 aufgebracht ist. Durch die unterschiedlichen Wärmedehnungsfähigkeiten der beiden Schichten verformt sich das Trägerteil 24, und da das Trägerteil 24 mit dem rahmenartigen Abschnitt 27 des Aktorelements 9 verbunden ist, wird das Ventilglied 20 mit seinem freien Ende 22 nach oben ausgelenkt, da das Trägerteil 24 am anderen Ende mit dem Befestigungselement 25 ortsfest am Gehäuse eingespannt ist. Das freie Ende 22 bewegt sich bei entsprechender Einstellung der unterschiedlichen Wärmedehnungsfähigkeiten durch den erhitzten elektrischen Leiter 10 in Richtung der ersten Gehäuseöffnung 4, die Verschlusspartie 13 dichtet die erste Gehäuseöffnung 4 ab, und die Verschlusspartie 14 gibt gleichzeitig die dritte Gehäuseöffnung 6 frei, so dass ein Fluidfluss durch die Gehäuseöffnungen 5 und 6 erfolgen kann.

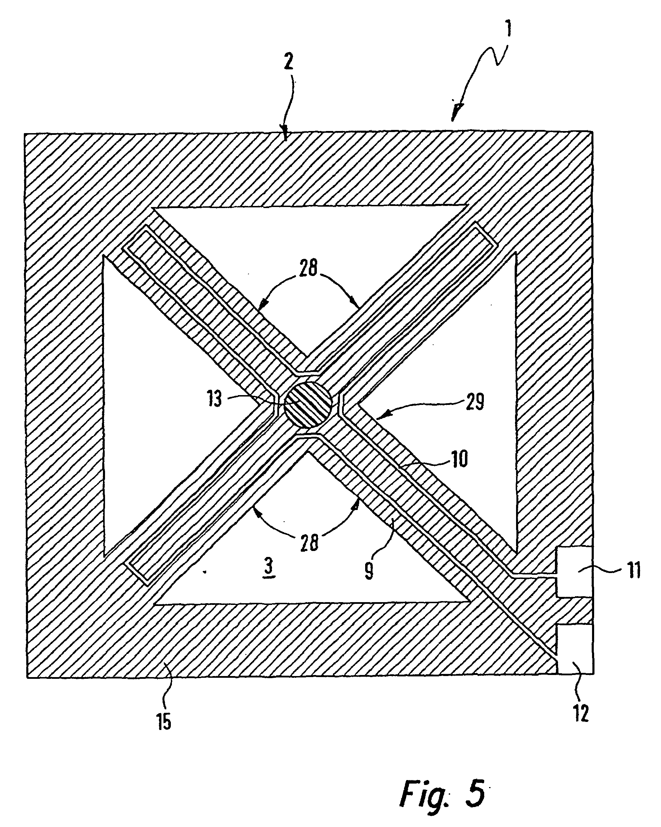

Bei einer weiteren, in Figur 5 dargestellten Ausführungsform ist das Ventilglied 29 sternförmig ausgebildet und besitzt ein Aktorelement 9 mit vier Armen 28, wobei mindestens eine Verschlusspartie 13 im zentralen Bereich vorgesehen ist und die Arme 28 des sternförmigen Ventilglieds mit ihren äußeren Enden an dem die Ventilkammer 3 begrenzenden Gehäuse 2 befestigt sind. Auf einem oder mehreren Armen 28 ist wiederum ein elektrischer Leiter 10 angeordnet, dessen Bestromung und Wärmeausdehnung zu einer Verbiegung und damit Auslenkung der mittig angeordneten Verschlusspartie 13 führt.

Je nach Ausgestaltung mit einem oder mehreren elektrischen Leitern kann ein mit einem sternförmigen Ventilglied 29 bzw. Aktorelement 9 versehenes Mikroventil 1 eine, zwei oder noch mehr Gehäuseöffnungen des Gehäuses steuern. Auch die Anzahl der Arme 28 des Aktorelements 9 kann variieren, so dass z.B. nur drei Arme 28 vorgesehen sind.

## Patentansprüche

1. Mikroventil mit einem eine Ventilkammer (3) bildenden Gehäuse (2), wobei die Ventilkammer (3) mit Fluidkanäle bildenden Gehäuseöffnungen (4, 5, 6) in Verbindung steht, und mit einem innerhalb der Ventilkammer (3) angeordneten Ventilglied (7, 20, 29), welches aus einem an einer Stelle am Gehäuse (2) befestigten länglichen Aktorelement (9) besteht, auf dem mindestens ein elektrischer Leiter (10) aufgebracht ist, dessen sich vom Aktorelement (9) unterscheidendes Wärmedehnungsverhalten die Auslenkung des Ventilgliedes (7, 20, 29) in mindestens eine Stellung hervorruft, **dadurch gekennzeichnet, dass** das Aktorelement (9) aus einem Kunststoffmaterial ausgebildet ist.

2. Mikroventil nach Anspruch 1, **dadurch gekennzeichnet, dass** das Gehäuse (2) mehrteilig ausgebildet ist, wobei das Aktorelement (9) zusammen mit einem Teil (15) des Gehäuses (2) aus einem Kunststoffmaterial bestehend ausgebildet ist.

3. Mikroventil nach Anspruch 1 oder 2, **dadurch gekennzeichnet, dass** ein Teil (15) des Gehäuses (2) und das Aktorelement (9) einstückig ausgebildet sind und zweckmäßigerweise im Wesentlichen in einer Ebene angeordnet sind.

4. Mikroventil nach einem der Ansprüche 1 bis 3, **dadurch gekennzeichnet, dass** das Aktorelement (9) an einer Stelle mit dem Gehäuse (2) verbunden ist und an zwei gegenüberliegenden Bereichen des Aktorelements (9) mit jeweils einer Verschlusspartie (13, 14) versehen ist, um bei einer Auslenkung in der einen Richtung eine erste Gehäuseöffnung (4) abzudichten und bei entgegengesetzter Auslenkung eine zweite Gehäuseöffnung (5) abzudichten.

5. Mikroventil nach einem der Ansprüche 1 bis 4, **dadurch gekennzeichnet, dass** ein freies Ende (8, 22, 23) des Aktorelements (9) in einer Führung oder durch ein elastisches Element relativ zum Gehäuse (2) beweglich gelagert ist.

6. Mikroventil nach einem der Ansprüche 1 bis 5, **dadurch gekennzeichnet, dass** das Ventilglied (20) in der Art einer Wippe im Gehäuse (2) angeordnet ist, wobei zwei freistehende Enden (22, 23) jeweils mit mindestens einer Verschlusspartie (13, 14) versehen sind, um in einer ersten Stellung eine erste Gehäuseöffnung (4) mit einer Verschlusspartie (13) abzudichten und dabei eine zweite Gehäuseöffnung (6) freizugeben und in einer zweiten Stellung die zweite Gehäuseöffnung (6) mit der anderen Verschlusspartie (14) abzudichten und dabei die erste Gehäuseöffnung (4) freizugeben.

7. Mikroventil nach Anspruch 6, **gekennzeichnet durch** eine dritte Gehäuseöffnung (5), die mit der jeweils freigegebenen ersten oder zweiten Gehäuseöffnung (4, 5) in Verbindung steht.

8. Mikroventil nach Anspruch 6 oder 7, **dadurch gekennzeichnet, dass** sämtliche Gehäuseöffnungen (4, 5, 6) auf der gleichen Seite des Aktorelementes (9) am Gehäuse (2) angeordnet sind.

9. Mikroventil nach einem der Ansprüche 6 bis 8, **dadurch gekennzeichnet, dass** ein freies Ende (22) des Aktorelements (9) mit einem an dem Gehäuse (2) befestigten Trägerteil (24) verbunden ist, auf dem zumindest ein Teil des elektrischen Leiters (10) aufgebracht ist, um das Aktorelement (9) auszulenken.

10. Mikroventil nach Anspruch 9, **dadurch gekennzeichnet, dass** das Trägerelement (24) innerhalb eines rahmenartigen Abschnittes des Aktorelements (9) angeordnet ist.

11. Mikroventil nach einem der Ansprüche 1 bis 10, **dadurch gekennzeichnet, dass** das Aktorelement (9) mehrere am Gehäuse (2) gelagerte Arme (28) aufweist, an deren Schnittstelle mindestens eine Verschlusspartie (13) angeordnet ist.

12. Mikroventil nach einem der Ansprüche 1 bis 11, **dadurch gekennzeichnet, dass** auf einer Fläche des Aktorelements (9) mindestens eine Leiterschleife des elektrischen Leiters (10) vorgesehen ist.

13. Mikroventil nach einem der Ansprüche 1 bis 12, **dadurch gekennzeichnet, dass** das Aktorelement (9) mit mindestens einer Durchbrechung (18, 19) versehen ist, die einen schnellen Druckausgleich des Fluids zulässt.

14. Mikroventil nach einem der Ansprüche 1 bis 13, **dadurch gekennzeichnet, dass** das Aktorelement (9) einschließlich des elektrischen Leiters (10) als Heißprägebauteil ausgebildet ist.

## Claims

1. Micro-valve with a housing (2) representing a valve chamber (3), whereby the valve chamber (3) is connected to housing ports (4, 5, 6) forming fluid passages, and with a valve member (7, 20, 29) located within the valve chamber (3) and consisting of an oblong actuator element (9) secured to the housing (2) at one point and fitted with at least one electrical conductor (10), the thermal expansion characteristics of which differ from those of the actuator element (9), deflecting the valve member (7, 20, 29) into at least one position, **characterised in that** the actuator element (9) is made of a plastic material.

2. Micro-valve according to claim 1, **characterised in that** the housing (2) is designed in several parts, the actuator element (9) together with a part (15) of the housing (2) being made of a plastic material.

3. Micro-valve according to claim 1 or 2, **characterised in that** a part (15) of the housing (2) is produced integral with the actuator element (9) and expediently located substantially in the same plane.

4. Micro-valve according to any of claims 1 to 3, **characterised in that** the actuator element (9) is joined to the housing (2) at one point and provided with a sealing section (13, 14) in each of two opposite areas of the actuator element (9) to seal a first housing port (4) when deflected in one direction and a second housing port (5) when deflected in the opposite direction.

5. Micro-valve according to any of claims 1 to 4, **characterised in that** a free end (8, 22, 23) of the actuator element (9) is movably mounted relative to the housing (2) in a guide or by means of a flexible element.

6. Micro-valve according to any of claims 1 to 5, **characterised in that** the valve member (20) is mounted in the housing (2) in the manner of a rocker, with two free ends (22, 23) provided with at least one sealing section (13, 14) each for sealing a first housing port (4) with a sealing section (13) in a first position while releasing a second housing port (6), and for sealing the second housing port (6) with the other sealing section (14) in a second position while releasing the first housing port (4).

7. Micro-valve according to claim 6, **characterised in that** a third housing port (5) communicates with the released first or second housing port (4, 5) respectively.

8. Micro-valve according to claim 6 or 7, **characterised in that** all housing ports (4, 5, 6) are located on the housing (2) on the same side of the actuator element (9).

9. Micro-valve according to any of claims 6 to 8, **characterised in that** a free end (22) of the actuator element (9) is joined to a support part (24) secured to the housing (2), to which at least part of the electrical conductor (10) is applied to deflect the actuator element (9).

10. Micro-valve according to claim 9, **characterised in that** the support element (24) is located within a frame-like section of the actuator element (9).

11. Micro-valve according to any of claims 1 to 10, **characterised in that** the actuator element (9) has a plurality of arms (28) mounted on the housing (2), at the intersection of which at least one sealing section (13) is located.

12. Micro-valve according to any of claims I to 11, **characterised in that** at least one conductor loop of the electrical conductor (10) is provided on a surface of the actuator element (9).

13. Micro-valve according to any of claims 1 to 12, **characterised in that** the actuator element (9) is provided with at least one opening (18, 19) allowing for rapid pressure balance of the fluid.

14. Micro-valve according to any of claims 1 to 13,**characterised in that** the actuator element (9) including the electrical conductor (10) is designed as a hot embossed component.

## Revendications

1. Soupape miniaturisée comprenant une cage (2) formant chambre de soupape (3), la chambre de soupape (3) se trouvant en liaison avec des ouvertures (4, 5, 6) ménagées dans la cage qui forment des canaux pour fluides, et comprenant un organe de soupape (7, 20, 29), monté à l'intérieur de la chambre de soupape (3), qui est constitué par un élément actif (9) allongé, fixé en un point de la cage (2), sur lequel est disposé au moins un conducteur électrique (10) dont la dilatation thermique, qui est différente de celle de l'élément actif (9), entraîne la détection de l'organe de soupape (7, 20, 29) dans au moins une position, **caractérisée en ce que** l'élément actif (9) est constitué dans un matériau synthétique.

2. Soupape miniaturisée selon la revendication 1, **caractérisée en ce que** la cage (2) est constituée de plusieurs parties, l'élément actif (9) étant constitué, avec une partie (15) de la cage (2), dans un matériau synthétique.

3. Soupape miniaturisée selon la revendication 1 ou 2, **caractérisée en ce qu'**une partie (15) de la cage (2) et l'élément actif (9) ne forment qu'une seule pièce et sont avantageusement disposés sensiblement dans un seul plan.

4. Soupape miniaturisée selon l'une des revendications 1 à 3, **caractérisée en ce que** l'élément actif (9) est relié à la cage (2) en un point et, en deux zones opposées de l'élément actif (9), est pourvu d'une partie de fermeture (13, 14) afin, dans le cas d'une déflection dans une direction, de rendre étanche une première ouverture (4) ménagée dans la cage et, dans le cas d'une déflection dans le sens opposé, de rendre étanche une deuxième ouverture (5) ménagée dans la cage.

5. Soupape miniaturisée selon l'une des revendications 1 à 4, **caractérisée en ce qu'**une extrémité libre (8, 22, 23) de l'élément actif (9) est montée mobile, dans un dispositif de guidage ou grâce à un élément élastique, par rapport à la cage (2).

6. Soupape miniaturisée selon l'une des revendications 1 à 5, **caractérisée en ce que** l'organe de soupape (20) est monté dans la cage (2) à la façon d'une bascule, deux extrémités libres (22, 23) étant chacune pourvues d'au moins une partie de fermeture (13, 14) afin, dans une première position, de rendre étanche, par une partie de fermeture (13), une première ouverture (4) ménagée dans la cage, libérant dans ce cas une deuxième ouverture (6) ménagée dans la cage et, dans une deuxième position, de rendre étanche, par l'autre partie de fermeture (14), la deuxième ouverture (6) ménagée dans la cage, libérant ainsi la première ouverture (4) ménagée dans la cage.

7. Soupape miniaturisée selon la revendication 6, **caractérisée par** une troisième ouverture (5) ménagée dans la cage, qui est en liaison avec la première ou la deuxième ouverture (4, 5) qui a été libérée.

8. Soupape miniaturisée selon la revendication 6 ou 7, **caractérisée en ce que** toutes les ouvertures (4, 5, 6) ménagées dans la cage (2) se trouvent du même côté de l'élément actif (9).

9. Soupape miniaturisée selon l'une des revendications 6 à 8, **caractérisée en ce qu'**une extrémité libre (22) de l'élément actif (9) est reliée à une partie porteuse (24) fixée à la cage (2), sur laquelle est montée au moins une partie du conducteur électrique (10) afin de défléchir l'élément actif (9).

10. Soupape miniaturisée selon la revendication 9, **caractérisée en ce que** l'élément porteur (24) est monté à l'intérieur d'un tronçon, du type cadre, de l'élément actif (9).

11. Soupape miniaturisée selon l'une des revendications 1 à 10, **caractérisée en ce que** l'élément actif (9) présente plusieurs bras (28) montés sur la cage (2), à l'intersection desquels est disposée au moins une partie de fermeture (13).

12. Soupape miniaturisée selon l'une des revendications 1 à 11, **caractérisée en ce qu'**est prévue, sur une surface de l'élément actif (9), au moins une boucle conductrice formée par le conducteur électrique (10).

13. Soupape miniaturisée selon l'une des revendications 1 à 12, **caractérisée en ce que** l'élément actif (9) est pourvu d'au moins un perçage (18, 19) qui permet un rapide équilibrage en pression du fluide.

14. Soupape miniaturisée selon l'une des revendications 1 à 13, **caractérisée en ce que** l'élément actif (9), y compris le conducteur électrique (10), sont conformés en composants estampés à chaud.
